# EUROPEAN PATENT SPECIFICATION

(11) **EP 3 628 560 B1**
(45) Date of publication and mention of the grant of the patent: **16.06.2021**
(21) Application number: 18210399.4
(22) Date of filing: 05.12.2018
(51) Int. Cl.: B60W 50/08, B60W 50/10, B60W 50/14, B60W 30/18, G08G 1/16, G08G 1/0962, B60W 50/00

(54) **APPARATUS AND METHOD FOR LANE CHANGE CONTROL**
VORRICHTUNG UND VERFAHREN ZUR SPURWECHSELSTEUERUNG
APPAREIL ET PROCÉDÉ DE COMMANDE DE CHANGEMENT DE VOIE

(30) Priority: 27.09.2018 KR 20180114940
(43) Date of publication of application: 01.04.2020
(73) Proprietor: Hyundai Motor Company, Seoul 06797 (KR); Kia Motors Corporation, Seoul 06797 (KR)
(72) Inventor: Kim, Hoi Won, 18280 Gyeonggi-do (KR); Park, Chan Il, 18280 Gyeonggi-do (KR); Kim, Beom Jun, 18280 Gyeonggi-do (KR); Yoo, Hyun Jae, 18280 Gyeonggi-do (KR)
(74) Representative: Hoffmann Eitle

(56) References cited:
- EP-A1- 2 978 648
- EP-A1- 3 269 609
- US-A1- 2016 225 261
- US-A1- 2017 240 172

## Description

### FIELD

The present invention relates to an apparatus and a method for lane change control.

### BACKGROUND

The statements in this section merely provide background information related to the present invention and may not constitute prior art.

A vehicle may be equipped with a plurality of systems for supporting the driving of a driver to enhance his or her driving convenience.

Among such driver supporting systems, a lane change control system may determine whether a speed, a location, and the like of a surrounding vehicle are suitable for performing a lane change and may control steering torque, a vehicle speed, and the like, thus performing a lane change.

Herein, the lane change control system may operate on only a limited-access road such as a highway. When a vehicle departs from the limited-access road, the lane change control system may be automatically deactivated.

In this case, a driver should convert a switch for activating the lane change control system into an on state whenever his or her vehicle enters the limited-access road. We have discovered that when the vehicle departs from the limited-access road for a while and enters the limited-access road again in a state where the lane change control system is activated, the driver may fail to recognize a state where the lane change control system is deactivated.

US 2017/240172 A1 describes a lane change controller that determines whether lane change is available or unavailable on the basis of a detection result of an obstacle by a radar and an obstacle recognizer in response to detection of a winker operation by an operation detection unit. A lane keep controller continues lane keep control if the operation detection unit detects the winker operation during the lane keep control and if the lane change controller determines that the lane change is unavailable.

EP 3 269 609 describes that a travel history generator generates, for each driver, a travel history associating an environmental parameter indicating a travel environment through which a vehicle has previously traveled with an action selected by the driver in response to the environmental parameter. An acquisition unit acquires a travel history similar to a travel history of a current driver from among travel histories generated by the travel history generator. A driver model generator generates a driver model based on the travel history acquired by the acquisition unit. A determination unit determines the next action based on the driver model generated by the driver model generator.

US 2016/225261 A1 describes a drive assistance apparatus including a target trajectory setting unit configured to set a target trajectory in a lane change assistance based on a movement time taken for a vehicle of which the direction indicator is continued to be in ON-state to move a lateral distance set in advance to the adjacent lane side from an operation start lateral position, and a lane change assistance unit configured to execute the lane change assistance for causing the vehicle to change lane along the target trajectory in a case where the lateral position of the vehicle of which the direction indicator is continued to be in ON-state reaches the assistance start lateral position set in advance in the travelling lane from the setting of the target trajectory by the target trajectory setting unit.

EP 2 978 648 A1 describes a motor vehicle lateral collision avoidance system, the system being operable to: monitor a position of a vehicle with respect to a first lane of a road occupied by the vehicle; detect the existence of an obstacle representing a collision hazard in a second lane adjacent the first; and detect on intention of the driver of the vehicle to change from the first lane to the second lane.

### SUMMARY

The present invention has been made to solve the above-mentioned problems occurring in the prior art while advantages achieved by the prior art are maintained intact.

To this end, the present invention provides an apparatus for lane change control according to claim 1 and a method for lane change control according to claim 10. The dependent claims concern particular embodiments.

According to the invention an apparatus for lane change control includes a determination device configured to determine whether a plurality of predetermined operation conditions are met when a vehicle enters a lane change control section and to determine an intention for a driver of the vehicle to use a lane change control function, a guide device configured to configure an information screen for the lane change control function based on the determined intention of the driver, and an interface configured to display the configured information screen.

The determination device is further configured to determine whether a lane change control switch is turned on when the vehicle enters the lane change control section.

The determination device is further configured to determine whether the plurality of predetermined operation conditions are met, when the lane change control switch is turned off.

The plurality of operation conditions may include a first condition for an operation of a turn signal switch, a second condition for steering torque, and a third condition for a collision risk with a surrounding vehicle located in a target lane to which the vehicle moves for the lane change.

The determination device may be configured to determine that the first condition is met, when the turn signal switch is operated and maintained longer than or equal to a reference time.

The determination device may be configured to determine that the second condition is met, when a state where the steering torque is less than a reference torque is maintained longer than or equal to a reference time.

The determination device may be configured to determine that the third condition is met, when a time to collision (TTC) with the surrounding vehicle is longer than or equal to a collision reference time and when a relative distance from the surrounding vehicle to the vehicle is greater than a reference distance.

The determination device may be configured to determine that the driver uses the lane change control function, when all the first to third conditions are met.

The information screen may include an information message for inquiring about approval to use the lane change control function.

The apparatus may further include a controller configured to activate the lane change control function and perform lane change control for the vehicle, when a feedback from the driver is received via the information screen.

The controller may be configured to end the information screen, when the feedback from the driver is not received via the information screen within a predetermined time.

According to the invention a method for lane change control includes:
determining, by a determination device, whether a plurality of predetermined operation conditions are met when a vehicle enters a lane change control section, and determining an intention for a driver of the vehicle to use a lane change control function, configuring, by a guide device, an information screen for the lane change control function based on the determined intention of the driver, and displaying the configured information screen on a display,
wherein determining the intention of the driver comprises: determining whether a lane change control switch is turned on, when the vehicle enters the lane change control section and determining whether the plurality of predetermined operation conditions including a first condition, a second condition, and a third condition are met, when the lane change control switch is turned off.

Further areas of applicability will become apparent from the description provided herein. It should be understood that the description and specific examples are intended for purposes of illustration only and are not intended to limit the scope of the present invention as defined by the appended claims.

### DRAWINGS

In order that the invention may be well understood, there will now be described various forms thereof, given by way of example, reference being made to the accompanying drawings, in which:
FIG. 1 is a block diagram illustrating a configuration of an apparatus for lane change control;
FIG. 2 is a drawing illustrating an operation of a determination device;
FIG. 3 is a drawing illustrating a state transition of a lane change control system;
FIG. 4 is a drawing illustrating an operation of a guide device;
FIG. 5 is a flowchart illustrating an operation of a method for lane change control; and
FIG. 6 is a block diagram illustrating a configuration of a computing system which executes a method for lane change control.

The drawings described herein are for illustration purposes only and are not intended to limit the scope of the present invention in any way.

### DETAILED DESCRIPTION

The following description is merely exemplary in nature and is not intended to limit the present invention or its uses uses. It should be understood that throughout the drawings, corresponding reference numerals indicate like or corresponding parts and features.

In addition, in describing an exemplary form of the present invention, if it is determined that a detailed description of related well-known configurations or functions blurs the gist of the present invention, it will be omitted.

In describing elements of forms of the present invention, the terms 1^{st}, 2^{nd}, first, second, A, B, (a), (b), and the like may be used herein. These terms are only used to distinguish one element from another element, but do not limit the corresponding elements irrespective of the nature, turn, or order of the corresponding elements. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

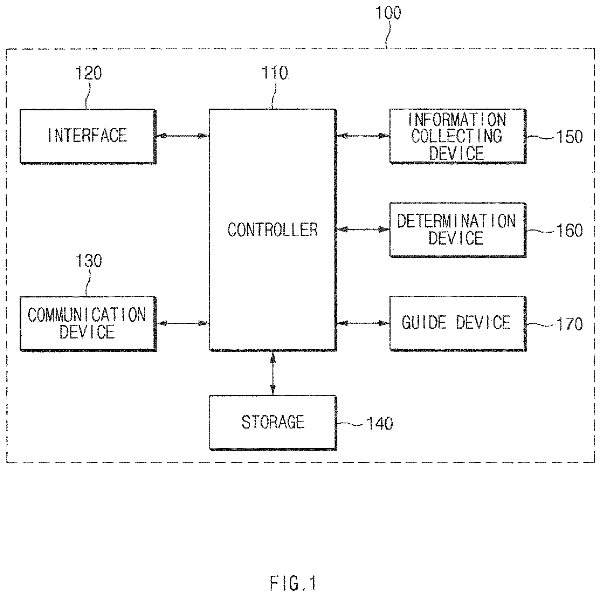

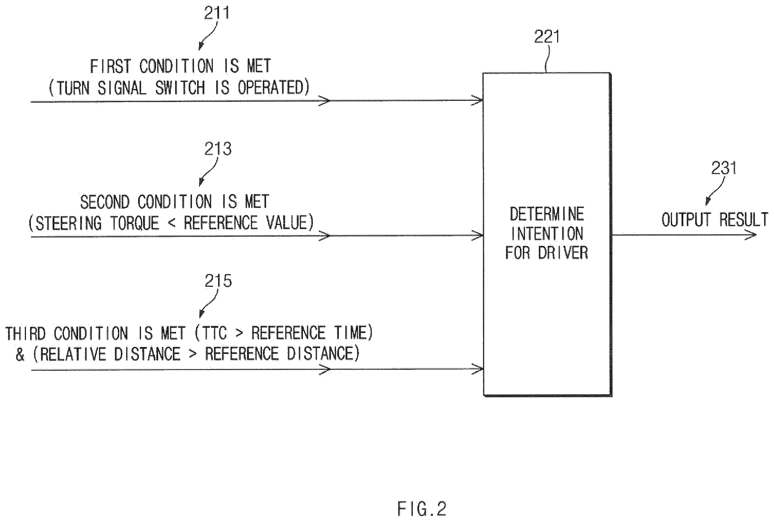

FIG. 1 is a block diagram illustrating a configuration of an apparatus for lane change control according to an exemplary form of the present disclosure. FIG. 2 is a drawing illustrating an operation of a determination device according to another form of the present invention.

An apparatus for lane change control 100 in one form of the present disclosure may be implemented in a vehicle. In this case, the apparatus 100 may be integrated with control units in the vehicle. Furthermore, the apparatus 100 may be implemented independently of the control units in the vehicle and may be connected with the control units of the vehicle by a separate connection means. Herein, the apparatus 100 may be driven as a lane change assist system. The lane change assist system may refer to a system which assists in controlling steering torque and vehicle speed and safely changing a lane without a collision with another vehicle located on a lane to be changed, when a driver wants to change the lane while driving.

Referring to FIG. 1, the apparatus 100 may include a controller 110, an interface 120, a communication device 130, a storage 140, an information collecting device 150, a determination device 160, and a guide device 170. Herein, the controller 110, the information collecting device 150, the determination device 160, and the guide device 170 of the apparatus 100 maybe implemented as at least one or more processors.

The controller 110 may process a signal transmitted between respective components of the apparatus 100.

The interface 120 include an input means for receiving a command from the driver and an output means for outputting an operation state, an operation result, and the like of the apparatus 100.

Herein, the input means may include a key button and may further include a mouse, a joystick, a jog shuttle, a stylus pen, and the like. Furthermore, the input means may include a soft key implemented on a display.

The output means may include the display and may further include a voice output means such as a speaker. In this case, if a touch sensor such as a touch film, a touch sheet, or a touch pad is installed in the display, the display may operate as a touch screen and may be implemented in the form of integrating the input means with the output means.

In this case, the display may include at least one of a liquid crystal display (LCD), a thin film transistor-LCD (TFT-LCD), an organic light-emitting diode (OLED), a flexible display, a field emission display (FED), or a three-dimensional (3D) display.

The communication device 130 may include a communication module for supporting a communication interface with sensors, electronics, and/or control units mounted on the vehicle. As an example, the communication module may receive driving information of the vehicle from sensors loaded into the vehicle. Moreover, the communication module may receive location information of the vehicle from a navigation device.

Herein, the communication module may include a module for supporting vehicle network communication such as controller area network (CAN) communication, local interconnect network (LIN) communication, and flex-ray communication.

The storage 140 may store data, an algorithm, and/or the like desired for operating the apparatus 100.

For example, the storage 140 may store driving information of the vehicle, received via the communication device 130 and may store condition information for determining an intention for the driver to use a lane change control function. Furthermore, the storage 140 may store a command, and/or an algorithm for configuring an information screen for notifying the driver that the lane change control function is deactivated. Moreover, the storage 140 may store a command and/or an algorithm for lane change control.

Herein, the storage 140 may include storage media such as a random access memory (RAM), a static RAM (SRAM), a read-only memory (ROM), a programmable ROM (PROM), and an electrically erasable PROM (EEPROM).

The information collecting device 150 may collect a plurality of information desired to implement the lane change control function.

For example, the information collecting device 150 may collect location information of the vehicle, for example, information indicating that the vehicle enters a limit-access road such as a highway, from the navigation device via the communication device 130. Furthermore, the information collecting device 150 may collect driving information, such as a state where a lane change control switch is turned on/off, a state where a turn signal switch is turned on/off, steering torque, a vehicle speed, detection information associated with a surrounding, a time to collision (TTC) with the surrounding vehicle, and a relative distance from the surrounding vehicle.

The determination device 160 may determine whether the vehicle enters a road section capable of performing lane change control (hereinafter referred to as "lane change control section"), from location information of the vehicle, collected by the information collecting device 150. For example, the determination device 160 may determine whether the vehicle enters the lane change control section, based on information indicating that the vehicle enters a limited-access road, received from the navigation device.

Furthermore, when it is verified that the vehicle enters the lane change control section, the determination device 160 may determine whether the lane change control switch is turned on, from information about driving of the vehicle, collected by the information collecting device 150. When it is verified that the lane change control switch is turned off, the determination device 160 may determine whether operation conditions preset to determine an intention for the driver to use the lane change control function are met.

For example, the determination device 160 may determine a first condition for a state of the turn signal switch is met. In this case, when the turn signal switch is operated to be converted into an on state and when the on state of the turn signal switch is maintained longer than or equal to a reference time, the determination device 160 may determine that the first condition is met.

Herein, when the turn signal switch is operated, the determination device 160 may determine whether the operation of the turn signal switch is a full-turn operation or a half-turn operation. In this case, when the on state of the turn signal switch is maintained longer than or equal to the reference time by the half-turn operation of the turn signal switch, the determination device 160 may determine that the first condition is met.

Furthermore, the determination device 160 may determine whether a second condition for steering torque is met. In this case, when a state where the steering torque is less than reference torque is maintained longer than or equal to a reference time, the determination device 160 may determine whether the second condition is met.

Herein, when the driver directly performs a lane change, the steering torque may be greater than or equal to the reference torque. Thus, the determination device 160 may determine whether the second condition is met to exclude that the driver directly performs a lane change.

Moreover, the determination device 160 may determine whether a third condition for a collision risk with a surrounding vehicle located on a lane to be changed is met. In this case, when a time to collision (TTC) with the surrounding vehicle is longer than or equal to a collision reference time and when a relative distance from the surrounding vehicle is greater than a reference distance, the determination device 160 may determine that the third condition is met.

As such, the determination device 160 may determine whether the first condition, the second condition, and the third condition are met and may predict and determine an intention for the driver to use the lane change control function based on the determined result.

For example, the determination device 160 may predict and determine an intention for the driver to use the lane change control function based on the result of determining the first to third conditions as shown in reference numerals 211, 213, and 215 of FIG. 2 and may output the result of determining the intention for the driver to use the lane change control function as shown in reference numeral 221.

In this case, when it is verified that any one of the first to third conditions is not met, the determination device 160 may determine that there is no intention for the driver to use the lane change control function. In this case, the determination device 160 may output a first signal indicating that the driver does not have the intention to use the lane change control function to the controller 110. Thus, the controller 110 may keep the lane change control function inactive depending on the first signal from the determination device 160.

Meanwhile, only when all the first to third conditions are met as shown in reference numerals 211, 213, and 215 of FIG. 2, as shown in reference numeral 221, the determination device 160 may determine that the driver has the intention to use the lane change control function. In this case, the determination device 160 may output a second signal indicating that the driver has the intention to use the lane change control function to the controller 110 and/or the guide device 170.

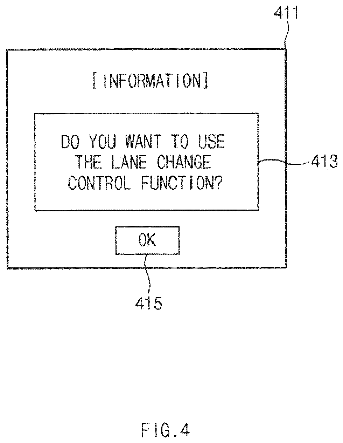

The guide device 170 may configure an information screen for inquiring about approval to use the lane change control function depending on the second signal from the determination device 160 and may output the configured information screen on a display of the interface 120. As an example, the information screen may be output in the form of pop-up. An exemplary form for the information screen will be described with reference to FIG. 4.

The controller 110 may determine to activate or deactivate the lane change control function depending on feedback of the driver on the information screen.

For example, when feedback of the driver for approving the use of the lane change function is received through the information screen, the controller 110 may activate the lane change control function. In this case, the controller 110 may output a control signal for controlling steering torque and a vehicle speed to each drive unit of the vehicle to perform lane change control.

Meanwhile, when the driver feedback through the information screen is not received within a predetermined time, the controller 110 may end the information screen. In this case, the controller 110 may keep the lane change function inactive.

As such, the apparatus 100 according to another form of the present disclosure may determine an intention of the driver when the vehicle enters a lane change control section and may notify the driver that the lane change control function is inactivated, such that the driver may recognize that the lane change control function is deactivated.

Meanwhile, the determination device 160 may determine whether the vehicle enters (departs from) the lane change control section. In this case, when it is verified that the vehicle enters (departs from) the lane change control section, the determination device 160 may output the result to the controller 110.

Thus, when it is verified that the vehicle enters (departs from) the lane change control section from the determination device 160 during lane change control, the controller 110 may end the lane change control and may convert the lane change control function into an inactive state.

The apparatus 100 may be implemented in the form of an independent hardware device including a memory and a processor for processing each operation or may be driven in the form of being included in another hardware device such as a microprocessor or a universal computer system.

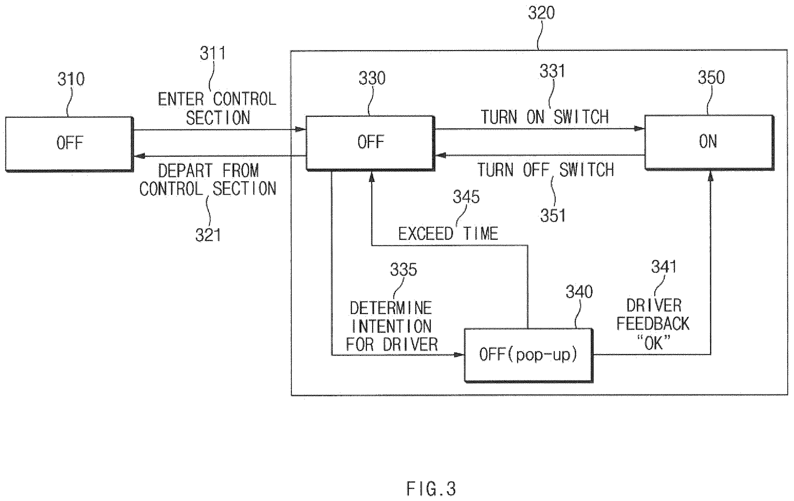

FIG. 3 is a drawing illustrating a state transition of a lane change control system according to another form of the present disclosure.

Referring to FIG. 3, reference numeral 310 may indicate a state of a lane change control function when a vehicle enters (departs from) a lane change control section. Reference numeral 320 may indicate state transition flow of the lane change control function when the vehicle enters the lane change control section.

As shown in reference numeral 310, the lane change control function may become an off state when the vehicle enters (departs from) the lane change control section.

In this case, when the lane change control function is in the off state before the vehicle enters (departs from) the lane change control section, it may be kept off after the vehicle enters (departs from) the section. Meanwhile, when the lane change control function is in the on state before the vehicle enters (departs from) the lane change control section, it may automatically change to the off state after the vehicle enters (departs from) the section.

As shown reference numeral 320, the lane change control function may fail to automatically change to an on state when the vehicle enters the lane change control section. In this case, when a lane change control switch is turned on as shown reference numeral 331, the lane change control function may change from an off state 330 to an on state 350. In contrast, when the lane change control switch is turned off as shown in reference numeral 351, the lane change control function may change from the on state 350 to the off state 330.

Meanwhile, other than turning on the lane change control switch as shown in reference numeral 331, as shown in reference numerals 335, 340, and 341, the lane change control function may change from the off state 330 to the on state 350 depending on driver feedback input through pop-up which is output on a display of an apparatus 100 of FIG. 1 based on the determination of an intention for the driver to use the lane change control function.

When the driver feedback through pop-up is not received within a predetermined time as shown in reference numeral 345, although the vehicle enters the lane change control section, the lane change control function may be maintained in the off state 330.

FIG. 4 is a drawing illustrating an operation of a guide device in another form of the present invention.

Referring to FIG. 4, reference numeral 411 may indicate an information screen configured by a guide device 170 of FIG. 1. Herein, the information screen 411 may include an information message 413, "Do you want to use the lane change control function?", for inquiring about approval to use the lane change control function and an OK button 415 for driver feedback.

Thus, a driver may verify the information message 413 on the information screen 411 displayed on a display of an interface 120 of FIG. 1 and may operate the OK button 415.

Thus, an apparatus 100 of FIG. 1 may activate the lane change control function as the driver operates the OK button 415 on the information screen 411 and may perform lane change control.

A description will be given in detail of an operation of the apparatus 100 including the above-mentioned components according to an exemplary form of the present invention

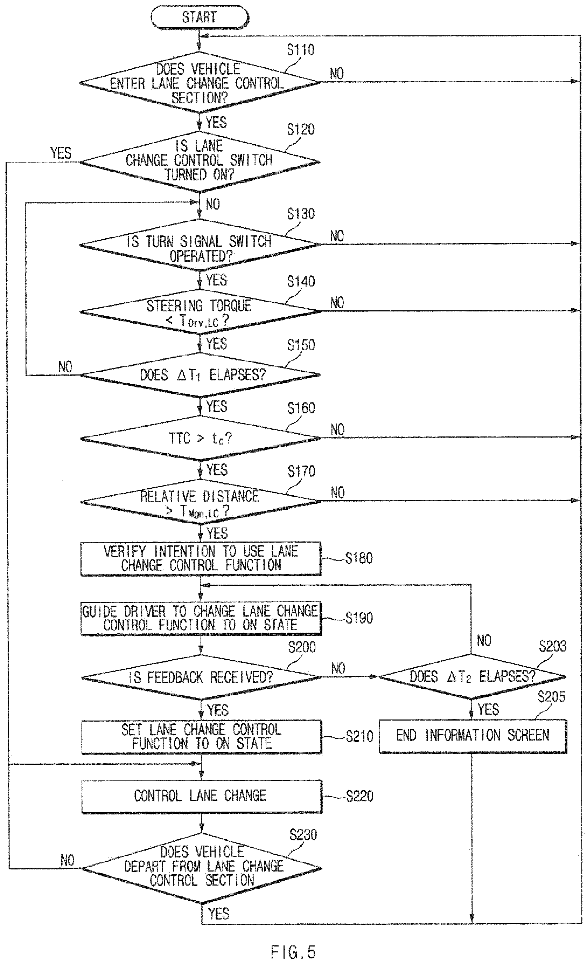

FIG. 5 is a flowchart illustrating an operation of a method for lane change control in one form of the present invention.

As shown in FIG. 5, when a vehicle enters a lane change control section in operation S110, in operation S120, an apparatus 100 of FIG. 1 may determine whether a lane change control switch is turned on. When the lane change control switch is turned on in operation S120, in operation S210, the apparatus 100 may set a lane change control function to an on state. In operation S220, the apparatus 100 may perform lane change control.

Meanwhile, when the lane change control switch is not turned on in operation S120, the apparatus 100 may determine whether all of predetermined operation conditions are met, through operations S130 to S170. When all the operation conditions are met, in operation S180, the apparatus 100 may verify an intention for a driver to use the lane change control function.

In other words, the apparatus 100 may determine whether a turn signal switch is operated in operation S130, whether steering torque is less than reference torque T_{Drv.LC} in operation S140, and whether the states of operations S130 and S140 are kept longer than or equal to a reference time Δt₁ in operation S150.

Furthermore, the apparatus 100 may determine whether a time to collision (TTC) with a surrounding vehicle on a lane to be changed is longer than a collision reference time t_{c} in operation S160 and whether a relative distance from the surrounding vehicle is greater than a reference distance D_{Mgn.LC} in operation S170.

After verifying the intention for the driver to use the lane change control function in operation S180, in operation S190, the apparatus 100 may guide the driver to convert the lane change control function into an on state. In operation S190, the apparatus 100 may display an information screen for inquiring about approval to use the lane change control function on its display.

When feedback is received within a predetermined time Δt₂ from the driver in operation S200, in operation S210, the apparatus 100 may set the lane change control function to the on state. In operation S220, the apparatus 100 may perform lane change control.

Meanwhile, when feedback is not received from the driver over the predetermined time Δt₂ in operation S203, in operation S205, the apparatus 100 may end an information screen. Thereafter, the apparatus 100 may perform the operation again from operation S110.

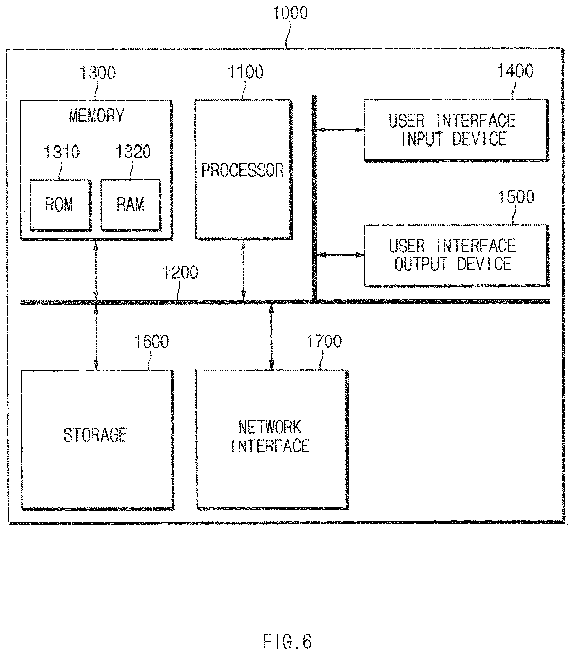

FIG. 6 is a block diagram illustrating a configuration of a computing system which executes a method according to an exemplary form of the present invention.

Referring to FIG. 6, a computing system 1000 may include at least one processor 1100, a memory 1300, a user interface input device 1400, a user interface output device 1500, a storage 1600, and a network interface 1700, which are connected with each other via a bus 1200.

The processor 1100 may be a central processing unit (CPU) or a semiconductor device for processing instructions stored in the memory 1300 and/or the storage 1600. Each of the memory 1300 and the storage 1600 may include various types of volatile or non-volatile storage media. For example, the memory 1300 may include a read only memory (ROM) and a random access memory (RAM).

Thus, the operations of the methods or algorithms described in connection with the forms disclosed in the specification may be directly implemented with a hardware module, a software module, or combinations thereof, executed by the processor 1100. The software module may reside on a storage medium (e.g., the memory 1300 and/or the storage 1600) such as a RAM, a flash memory, a ROM, an erasable and programmable ROM (EPROM), an electrically EPROM (EEPROM), a register, a hard disc, a removable disc, or a compact disc-ROM (CD-ROM). An exemplary storage medium may be coupled to the processor 1100. The processor 1100 may read out information from the storage medium and may write information in the storage medium. Alternatively, the storage medium may be integrated with the processor 1100. The processor and storage medium may reside in an application specific integrated circuit (ASIC). The ASIC may reside in a user terminal. Alternatively, the processor and storage medium may reside as a separate component of the user terminal.

According to an exemplary form of the present invention, the apparatus may determine whether a set driving condition is met when the vehicle enters a road section capable of performing lane change control to determine an intention for a driver to use a lane change control function and may notify the driver that the lane change control function is deactivated, such that the driver may quickly recognize that the lane change control function is deactivated.

Hereinabove, although the present invention has been described with reference to exemplary forms and the accompanying drawings, the present invention is not limited thereto, but may be variously modified and altered by those skilled in the art to which the present disclosure pertains without departing from the scope of the appended claims.

## Claims

1. An apparatus (100) for lane change control, comprising:
a determination device (160) configured to determine whether a vehicle enters a road section capable of performing lane change control referred to as a lane change control section from location information of the vehicle, and determine whether a plurality of predetermined operation conditions are met when the vehicle enters the lane change control section and configured to determine an intention for a driver of the vehicle to use a lane change control function;
a guide device (170) configured to configure an information screen for the lane change control function based on the determined intention of the driver; and
an interface (120) configured to display the configured information screen,
wherein the determination device (160) is configured to:
determine whether a lane change control switch is turned on when the vehicle enters the lane change control section, and
**characterised in that** the determination device (160) is further configured to determine whether the plurality of predetermined operation conditions are met, when the lane change control switch is turned off.

2. The apparatus (100) of claim 1, wherein the plurality of operation conditions comprises: a first condition for an operation of a turn signal switch, a second condition for a steering torque, and a third condition for a collision risk with a surrounding vehicle located in a target lane to which the vehicle moves for the lance change.

3. The apparatus (100) of claim 2, wherein the determination device (160) is configured to:
determine that the first condition is met, when the turn signal switch is operated and maintained longer than or equal to a reference time.

4. The apparatus (100) of claim 2, wherein the determination device (160) is configured to:
determine that the second condition is met, when a state where the steering torque is less than reference torque is maintained longer than or equal to a reference time.

5. The apparatus (100) of claim 2, wherein the determination device (160) is configured to:
determine that the third condition is met, when a time to collision with the surrounding vehicle is longer than or equal to a collision reference time and when a relative distance from the surrounding vehicle to the vehicle is greater than a reference distance.

6. The apparatus (100) of claim 2, wherein the determination device (160) is configured to:
determine that the driver uses the lane change control function, when all the first to third conditions are met.

7. The apparatus (100) of claim 1, wherein the information screen comprises an information message for inquiring about approval to use the lane change control function.

8. The apparatus (100) of claim 7, further comprising:
a controller (110) configured to activate the lane change control function and perform the lane change control for the vehicle, when a feedback from the driver is received via the information screen.

9. The apparatus (100) of claim 8, wherein the controller (110) is configured to:
end the information screen, when the feedback from the driver is not received via the information screen within a predetermined time.

10. A method for lane change control, the method comprising:
Determining, by a determination device, whether a vehicle enters a road section capable of performing lane change control referred to as a lane change control section from location information of the vehicle;
determining, by a determination device, whether a plurality of predetermined operation conditions are met when the vehicle enters the lane change control section, and determining an intention for a driver of the vehicle to use a lane change control function;
configuring, by a guide device, an information screen for the lane change control function based on the determined intention of the driver; and
displaying the configured information screen on a display,
wherein determining the intention of the driver comprises:
determining whether a lane change control switch is turned on, when the vehicle enters the lane change control section, and
determining whether the plurality of predetermined operation conditions including a first condition, a second condition, and a third condition are met, when the lane change control switch is turned off.

11. The method of claim 10, wherein determining whether the plurality of operation conditions are met comprises:
determining that the first condition is met, when a turn signal switch is operated and maintained longer than or equal to a reference time,
determining that the second condition is met, when a state where steering torque is less than a reference torque is maintained longer than or equal to a reference time,
determining that the third condition is met, when a time to collision (TTC) with the surrounding vehicle is longer than or equal to a collision reference time and when a relative distance from the surrounding vehicle to the vehicle is greater than a reference distance.

## Patentansprüche

1. Einrichtung (100) zur Spurwechselsteuerung, umfassend:
eine Bestimmungsvorrichtung (160), welche konfiguriert ist, um aus Ortungsinformationen des Fahrzeugs zu bestimmen, ob ein Fahrzeug in einen Straßenabschnitt einfährt, welcher in der Lage ist, Spurwechselsteuerung durchzuführen und als Spurwechselsteuerungsabschnitt bezeichnet wird, und zu bestimmen, ob eine Vielzahl von vorbestimmten Betriebsbedingungen erfüllt sind, wenn das Fahrzeug in den Spurwechselsteuerungsabschnitt einfährt, und konfiguriert ist, um eine Absicht, eine Spurwechselsteuerungsfunktion zu nutzen, für einen Fahrer des Fahrzeugs zu bestimmen;
eine Führungsvorrichtung (170), welche konfiguriert ist, um einen Informationsbildschirm für die Spurwechselsteuerungsfunktion auf Basis der bestimmten Absicht des Fahrers zu konfigurieren; und
eine Benutzeroberfläche (120), welche konfiguriert ist, um den konfigurierten Informationsbildschirm anzuzeigen,
wobei die Bestimmungsvorrichtung (160) konfiguriert ist, um:
zu bestimmen, ob ein Spurwechselsteuerungsschalter eingeschaltet ist, wenn das Fahrzeug in den Spurwechselsteuerungsabschnitt einfährt, und
**dadurch gekennzeichnet, dass** die Bestimmungsvorrichtung (160) weiter konfiguriert ist, um
zu bestimmen, ob die Vielzahl von vorbestimmten Betriebsbedingungen erfüllt sind, wenn der Spurwechselsteuerungsschalter ausgeschaltet ist.

2. Einrichtung (100) nach Anspruch 1, wobei die Vielzahl von Betriebsbedingungen umfasst: eine erste Bedingung für einen Betrieb eines Blinkerschalters, eine zweite Bedingung für ein Lenkdrehmoment, und eine dritte Bedingung für ein Kollisionsrisiko mit einem umgebenden Fahrzeug, welches sich in einer Zielspur befindet, auf welche sich das Fahrzeug anlässlich des Spurwechsels bewegt.

3. Einrichtung (100) nach Anspruch 2, wobei die Bestimmungsvorrichtung (160) konfiguriert ist, um:
zu bestimmen, dass die erste Bedingung erfüllt ist, wenn der Blinkerschalter bedient wird und länger als eine oder gleich einer Referenzzeit aufrechterhalten wird.

4. Einrichtung (100) nach Anspruch 2, wobei die Bestimmungsvorrichtung (160) konfiguriert ist, um:
zu bestimmen, dass die zweite Bedingung erfüllt ist, wenn ein Zustand, in dem das Lenkdrehmoment kleiner als Referenzdrehmoment ist, länger als eine oder gleich einer Referenzzeit aufrechterhalten wird.

5. Einrichtung (100) nach Anspruch 2, wobei die Bestimmungsvorrichtung (160) konfiguriert ist, um:
zu bestimmen, dass die dritte Bedingung erfüllt ist, wenn eine Zeit bis zu einer Kollision mit dem umgebenden Fahrzeug länger als eine oder gleich einer Kollisionsreferenzzeit ist, und wenn eine relative Distanz von dem umgebenden Fahrzeug zu dem Fahrzeug größer als eine Referenzdistanz ist.

6. Einrichtung (100) nach Anspruch 2, wobei die Bestimmungsvorrichtung (160) konfiguriert ist, um:
zu bestimmen, dass der Fahrer die Spurwechselsteuerungsfunktion nutzt, wenn alle der ersten bis dritten Bedingung erfüllt sind.

7. Einrichtung (100) nach Anspruch 1, wobei der Informationsbildschirm eine Informationsmeldung bezüglich einer Anfrage auf Genehmigung der Nutzung der Spurwechselsteuerungsfunktion umfasst.

8. Einrichtung (100) nach Anspruch 7, weiter umfassend:
eine Steuereinheit (110), welche konfiguriert ist, um die Spurwechselsteuerungsfunktion zu aktivieren und die Spurwechselsteuerung für das Fahrzeug durchzuführen, wenn über den Informationsbildschirm eine Rückmeldung von dem Fahrer empfangen wird.

9. Einrichtung (100) nach Anspruch 8, wobei die Steuereinheit (110) konfiguriert ist, um:
den Informationsbildschirm zu beenden, wenn die Rückmeldung von dem Fahrer nicht innerhalb einer vorbestimmten Zeit über den Informationsbildschirm empfangen wird.

10. Verfahren zur Spurwechselsteuerung, wobei das Verfahren umfasst:
Bestimmen, durch eine Bestimmungsvorrichtung, ob ein Fahrzeug in einen Straßenabschnitt einfährt, welcher in der Lage ist, Spurwechselsteuerung durchzuführen und als Spurwechselsteuerungsabschnitt bezeichnet wird, aus Ortungsinformationen des Fahrzeugs;
Bestimmen, durch eine Bestimmungsvorrichtung, ob eine Vielzahl von vorbestimmten Betriebsbedingungen erfüllt sind, wenn das Fahrzeug in den Spurwechselsteuerungsabschnitt einfährt, und Bestimmen einer Absicht für einen Fahrer des Fahrzeugs, eine Spurwechselsteuerungsfunktion zu nutzen;
Konfigurieren, durch eine Führungsvorrichtung, eines Informationsbildschirms für die Spurwechselsteuerungsfunktion auf Basis der bestimmten Absicht des Fahrers; und
Anzeigen des konfigurierten Informationsbildschirms auf einer Anzeige,
wobei Bestimmen der Absicht des Fahrers umfasst:
Bestimmen, ob ein Spurwechselsteuerungsschalter eingeschaltet ist, wenn das Fahrzeug in den Spurwechselsteuerungsabschnitt einfährt, und
Bestimmen, ob die Vielzahl von vorbestimmten Betriebsbedingungen, welche eine erste Bedingung, eine zweite Bedingung und eine dritte Bedingung beinhalten, erfüllt sind, wenn der Spurwechselsteuerungsschalter ausgeschaltet ist.

11. Verfahren nach Anspruch 10, wobei Bestimmen, ob die Vielzahl von Betriebsbedingungen erfüllt sind, umfasst:
Bestimmen, dass die erste Bedingung erfüllt ist, wenn ein Blinkerschalter länger als eine oder gleich einer Referenzzeit aufrechterhalten und bedient wird,
Bestimmen, dass die zweite Bedingung erfüllt ist, wenn ein Zustand, in dem Lenkdrehmoment kleiner als Referenzdrehmoment ist, länger als eine oder gleich einer Referenzzeit aufrechterhalten wird,
Bestimmen, dass die dritte Bedingung erfüllt ist, wenn eine Zeit bis zu einer Kollision (TTC) mit dem umgebenden Fahrzeug länger als eine oder gleich einer Kollisionsreferenzzeit ist, und wenn eine relative Distanz von dem umgebenden Fahrzeug zu dem Fahrzeug größer als eine Referenzdistanz ist.

## Revendications

1. Appareil (100) de commande de changement de voie, comprenant :
un dispositif de détermination (160) configuré pour déterminer si un véhicule entre dans une section de route permettant de réaliser une commande de changement de voie, à laquelle il est fait référence en tant que section de commande de changement de voie, à partir d'informations d'emplacement du véhicule, et déterminer si une pluralité de conditions d'opération prédéterminées sont remplies lorsque le véhicule entre dans la section de commande de changement de voie, et configuré pour déterminer une intention d'un conducteur du véhicule d'utiliser une fonction de commande de changement de voie ;
un dispositif de guidage (170) configuré pour configurer un écran d'informations pour la fonction de commande de changement de voie sur la base de l'intention déterminée du conducteur ; et
une interface (120) configurée pour afficher l'écran d'informations configuré,
dans lequel le dispositif de détermination (160) est configuré pour :
déterminer si un commutateur de commande de changement de voie est activé lorsque le véhicule entre dans la section de commande de changement de voie, et
**caractérisé en ce que** le dispositif de détermination (160) est en outre configuré pour
déterminer si la pluralité de conditions d'opération prédéterminées sont remplies, lorsque le commutateur de commande de changement de voie est désactivé.

2. Appareil (100) selon la revendication 1, dans lequel la pluralité de conditions d'opération comprend : une première condition pour une opération d'un commutateur de clignotant, une deuxième condition pour un couple de direction, et une troisième condition pour un risque de collision avec un véhicule environnant situé dans une voie cible vers laquelle le véhicule se déplace pour le changement de voie.

3. Appareil (100) selon la revendication 2, dans lequel le dispositif de détermination (160) est configuré pour :
déterminer que la première condition est remplie lorsque le commutateur de clignotant est actionné et maintenu pendant un temps supérieur ou égal à un temps de référence.

4. Appareil (100) selon la revendication 2, dans lequel le dispositif de détermination (160) est configuré pour :
déterminer que la deuxième condition est remplie lorsqu'un état dans lequel le couple de direction est inférieur à un couple de référence est maintenu pendant un temps supérieur ou égal à un temps de référence.

5. Appareil (100) selon la revendication 2, dans lequel le dispositif de détermination (160) est configuré pour :
déterminer que la troisième condition est remplie, lorsqu'un temps restant avant la collision avec le véhicule environnant est supérieur ou égal à un temps de référence de collision et lorsqu'une distance relative depuis le véhicule environnant jusqu'au véhicule est supérieure à une distance de référence.

6. Appareil (100) selon la revendication 2, dans lequel le dispositif de détermination (160) est configuré pour :
déterminer que le conducteur utilise la fonction de commande de changement de voie, lorsque les première, deuxième et troisième conditions sont toutes remplies.

7. Appareil (100) selon la revendication 1, dans lequel l'écran d'informations comprend un message d'informations pour demander l'autorisation d'utiliser la fonction de commande de changement de voie.

8. Appareil (100) selon la revendication 7, comprenant en outre :
un organe de commande (110) configuré pour activer la fonction de commande de changement de voie et réaliser la commande de changement de voie pour le véhicule, lorsqu'une rétroaction du conducteur est reçue via l'écran d'informations.

9. Appareil (100) selon la revendication 8, dans lequel l'organe de commande (110) est configuré pour :
fermer l'écran d'informations lorsque la rétroaction du conducteur n'est pas reçue via l'écran d'informations au cours d'un temps prédéterminé.

10. Procédé de commande de changement de voie, le procédé comprenant :
la détermination, par un dispositif de détermination, si un véhicule entre dans une section de route permettant de réaliser une commande de changement de voie, à laquelle il est fait référence en tant que section de commande de changement de voie, à partir des informations d'emplacement du véhicule ;
la détermination, par un dispositif de détermination, si une pluralité de conditions d'opération prédéterminées sont remplies lorsque le véhicule entre dans la section de commande de changement de voie, et la détermination d'une intention d'un conducteur du véhicule d'utiliser une fonction de commande de changement de voie ;
la configuration, par un dispositif de guidage, d'un écran d'informations pour la fonction de commande de changement de voie sur la base de l'intention déterminée du conducteur ; et
l'affichage de l'écran d'informations configuré sur un afficheur,
dans lequel la détermination de l'intention du conducteur comprend :
la détermination si un commutateur de commande de changement de voie est activé lorsque le véhicule entre dans la section de commande de changement de voie, et
la détermination si la pluralité de conditions d'opération prédéterminées, incluant une première condition, une deuxième condition et une troisième condition, sont remplies, lorsque le commutateur de commande de changement de voie est désactivé.

11. Procédé selon la revendication 10, dans lequel la détermination si la pluralité de conditions d'opération sont remplies comprend :
la détermination que la première condition est remplie lorsqu'un commutateur de clignotant est actionné et maintenu pendant un temps supérieur ou égal à un temps de référence,
la détermination que la deuxième condition est remplie lorsqu'un état dans lequel un couple de direction est inférieur à un couple de référence est maintenu pendant un temps supérieur ou égal à un temps de référence,
la détermination que la troisième condition est remplie, lorsqu'un temps restant avant la collision (TTC) avec le véhicule environnant est supérieur ou égal à un temps de référence de collision et lorsqu'une distance relative depuis le véhicule environnant jusqu'au véhicule est supérieure à une distance de référence.
